Europäisches Patentamt

(19) European Patent Office

Office européen des brevets

(11) Numéro de publication : **0 143 867**
**B1**

(12) **FASCICULE DE BREVET EUROPÉEN**

(45) Date de publication du fascicule du brevet :
**15.03.89**

(21) Numéro de dépôt : **83402319.4**

(22) Date de dépôt : **02.12.83**

(51) Int. Cl.⁴ : **A 47 J 36/36**, A 47 J 29/06

(54) **Ustensile culinaire notamment casserole ou poele.**

(43) Date de publication de la demande :
**12.06.85 Bulletin 85/24**

(45) Mention de la délivrance du brevet :
**15.03.89 Bulletin 89/11**

(84) Etats contractants désignés :
**AT BE CH DE GB IT LI LU NL SE**

(56) Documents cités :
**BE–A– 395 255**
**BE–A– 775 392**
**DE–C– 16 426**
**DE–C– 550 274**
**DE–C– 820 486**
**FR–A– 815 631**
**FR–A– 2 500 289**
**GB–A– 422 378**
**US–A– 1 350 651**

(73) Titulaire : **Feuillolay, Jean Pierre**
**Anneville Ambourville**
**F-76480 Duclair (Seine Maritime) (FR)**

(72) Inventeur : **Feuillolay, Jean Pierre**
**Anneville Ambourville**
**F-76480 Duclair (Seine Maritime) (FR)**

(74) Mandataire : **Cabinet Pierre HERRBURGER**
**115, Boulevard Haussmann**
**F-75008 Paris (FR)**

## Description

La présente invention se rapporte à un ustensile culinaire notamment une casserole ou une poêle plus spécialement destiné à être utilisé sur une source de chaleur vive telle qu'une cuisinière à gaz, un barbecue ou une cheminée.

La crise du pétrole qui s'est déclarée ces dix dernières années a eu pour conséquence le désir croissant d'économiser au maximum l'énergie dont le prix est malheureusement de plus en plus élevé avec, comme corollaire, une vogue accrue des sources d'énergie comme des produits dits « naturels ».

Ce climat général a engendré la mise au point de produits dits « naturels » et « économiques » allant des plus sophistiqués, tels que les éoliennes utilisant l'énergie apportée par les vents, ou les maisons à chauffage de type solaire aux gadgets les plus élémentaires.

Dans cet état d'esprit, la présente invention propose un ustensile culinaire, notamment une casserole ou une poêle, permettant d'économiser l'énergie lorsqu'il est utilisé sur des réchauds de type classique tels que des cuisinières à gaz, et dont des variantes permettent de réaliser très facilement de nombreuses cuissons sur des braises et notamment sur un barbecue ou une cheminée.

L'ustensile culinaire qui fait l'objet de l'invention peut permettre la cuisson d'aliments solides ou liquides et se compose d'un manche, le cas échéant, d'un rebord supérieur ainsi que d'une surface de cuisson destinée à recevoir directement les aliments à cuire et portant à sa périphérie une collerette en forme de tronc de cône en un matériau conducteur de la chaleur, et notamment en tôle, allant en s'élargissant vers le bas et dont le bord inférieur constitue la surface d'appui de l'ustensile culinaire sur la source de chaleur, notamment la grille métallique d'une cuisinière à gaz ou d'un barbecue, ou directement sur la braise, cette collerette faisant office d'organe de concentration de la chaleur sur la surface de cuisson qui est constituée par une surface plane, en un matériau conducteur de la chaleur notamment en métal.

Bien entendu, cet ustensile culinaire peut être quelconque sans pour cela sortir du cadre de l'invention et notamment être constitué par une casserole, une poêle à frire, une sauteuse, une cocotte, etc...

La caractéristique principale de cet ustensile est donc la présence de la collerette qui peut être mise en place sur la surface de cuisson d'une manière quelconque (soudure, rivets...) et dont les dimensions et la forme sont fonction du but recherché.

Néanmoins, la configuration la plus fréquente correspond à une surface de cuisson circulaire associée à une collerette en forme de tronc de cône. Par un choix adéquat des dimensions du diamètre inférieur de la collerette, il est même possible de l'utiliser efficacement sur une plaque électrique.

En conséquence, un ustensile selon l'invention est dans son aspect le plus simple constitué par une poêle ou une casserole classique portant une collerette faisant office d'organe de concentration de la chaleur à sa partie inférieure. C'est-à-dire que dans ce cas, la surface de cuisson est simplement constituée par une plaque en un matériau conducteur de la chaleur et notamment en un métal.

Un ustensile de ce type est par exemple décrit dans le brevet FR 2 500 289 : la collerette qui fait office d'organe de concentration de la chaleur permet de réaliser des économies d'énergie non négligeables.

Selon une première variante de l'invention, l'ustensile est caractérisé en ce que la surface de cuisson comporte des perforations au travers desquelles l'aliment à cuire se trouve directement en contact avec la chaleur, lesdites perforations étant constituées de trous dont le diamètre est compris entre environ 1,5 et 3 mm.

Selon une autre caractéristique de l'invention, les perforations sont des trous circulaires disposés en quinconce.

Un tel ustensile est destiné à être utilisé sur un barbecue ou une cheminée où il peut être directement posé sur la braise, pour y cuire de manière très simple et économique des grillades, des poissons, des légumes, etc...

De manière surprenante, si l'on choisit le diamètre des trous de l'ordre de 2,5 mm, il est tout-à-fait possible d'y effectuer la cuisson d'oeufs sur le plat et même, avec des trous de l'ordre de 1,80 mm, d'y faire griller des crêpes sans que la pâte risque de couler sur les braises. Dans tous les cas, les aliments ainsi cuits prendront un goût spécial particulièrement agréable.

Selon une seconde variante de l'invention, l'ustensile culinaire est caractérisé en ce que la surface de cuisson comporte des ouvertures circulaires au travers desquelles l'aliment à cuire se trouve directement en contact avec la source de chaleur et qui sont susceptibles de permettre la mise en place d'oeufs destinés à être cuits durs ou à la coque. Un tel ustensile est destiné à permettre d'effectuer la cuisson sur la braise d'oeufs durs ou d'oeufs à la coque pour leur permettre de prendre un goût de fumée lui aussi très agréable.

Conformément à la configuration préférentielle de cette seconde variante, les ouvertures circulaires sont délimitées par des bagues de préférence métalliques réunies entre elles et/ou au bord supérieur de la collerette non destiné à être directement en contact avec la source de chaleur au moyen de tiges de liaison de préférence métalliques. Dans ce cas, l'ensemble formé par les bagues, les tiges de liaison et le bord supérieur de la collerette constitue la surface de cuisson.

Selon l'invention, la surface de cuisson d'un tel ustensile peut être constituée simplement d'une bague centrale entourée d'un nombre quelconque des bagues périphériques, la bague centrale étant reliée à chacune des bagues périphériques par une tige de liaison rigide tandis que chacune des bagues périphériques est en plus reliée au bord supérieur de la collerette par une tige de liaison rigide ou par une tige de liaison formant ressort.

Selon l'invention, les tiges de liaison peuvent être soit fixes soit amovibles.

Selon une autre caractéristique d'un tel ustensile, les extrémités des tiges de liaison rigides sont en forme de crochet, et l'une des extrémités des tiges de liaison formant ressort est également en forme de crochet tandis que l'autre extrémité est fixée au bord supérieur de la collerette, de préférence par soudure.

Cette disposition ne permet de monter au dernier moment sur la collerette qu'un nombre de bagues correspondant au nombre d'oeufs que l'on désire réellement faire cuire.

Malgré ces avantages, un tel ustensile culinaire présente néanmoins des inconvénients dus au fait que les oeufs ne sont pas maintenus d'une manière efficace et qu'il y a donc des risques de casse lorsqu'on les enlève ou les met en place ; par ailleurs, étant donné qu'ils reposent toujours du même côté sur la source de chaleur, les oeufs ne peuvent pas être cuits de manière uniforme.

A cet effet, l'invention concerne également un ustensile permettant une cuisson uniforme des oeufs correspondant à une amélioration des ustensiles conformes à la seconde variante décrite ci-dessus.

Un tel ustensile est caractérisé en ce qu'il comporte un couvercle se composant d'un second manche identique au premier, d'une seconde surface de cuisson identique à la première et d'une seconde collerette également identique à la première, et pouvant être déplacé entre une position d'ouverture permettant la mise en place des oeufs que l'on désire cuire et une position de cuisson où il est rabattu au-dessus de l'ustensile pour emprisonner chaque oeuf entre deux bagues identiques. Ce dispositif qui est donc en réalité constitué de deux dispositifs de la seconde variante placés l'un au-dessus de l'autre, et réunis par une charnière, permet de remédier aux inconvénients définis ci-dessus, c'est-à-dire que les oeufs y sont rigidement maintenus, sans risque de casse, et que le dispositif peut être facilement retourné pour aboutir à une cuisson uniforme des oeufs.

Selon une autre caractéristique de l'invention, ce dispositif comporte une butée permettant de maintenir les deux manches à une certaine distance l'un de l'autre en position de cuisson ainsi qu'une épingle de serrage permettant de fixer le manche dans cette position. Ces derniers organes ont pour but de faciliter l'opération de retournement de l'ustensile en cours de cuisson.

Les caractéristiques de l'ustensile culinaire qui fait l'objet de l'invention seront décrites plus en détail en se référant aux dessins annexés, dans lesquels :

- la figure 1 représente l'ustensile culinaire qui fait l'objet de l'invention dans sa forme de réalisation la plus simple,
- la figure 2 est une vue en perspective d'un ustensile culinaire selon la première variante de l'invention,
- les figures 3A et 3B sont des vues de dessus de la surface de cuisson de deux configurations possibles d'un ustensile selon la seconde variante de l'invention,
- la figure 4 est une vue en coupe d'un dispositif conforme à la seconde variante de l'invention.

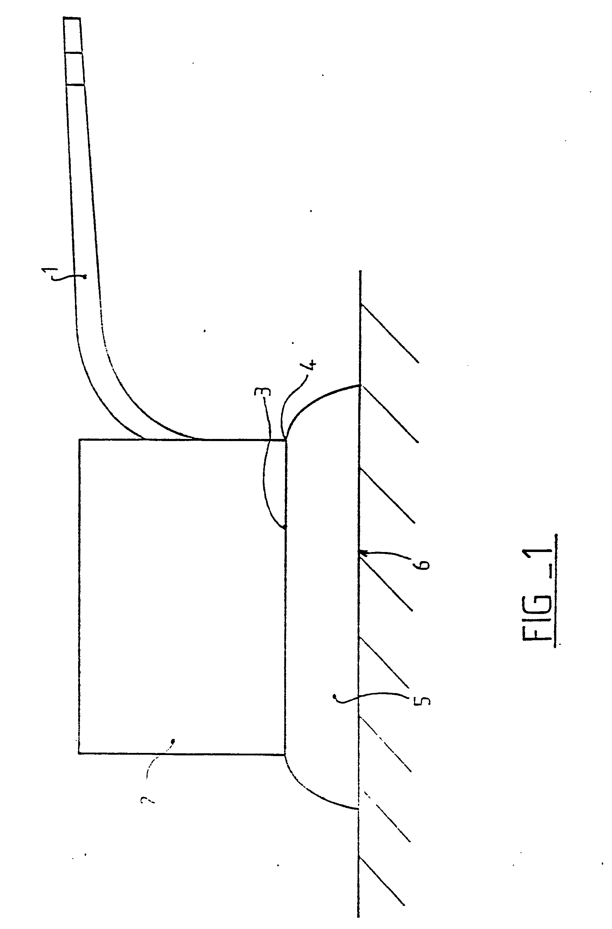

Selon la figure 1, l'ustensile culinaire et notamment la poêle ou la casserole objet de l'invention se compose d'un manche 1, d'un rebord supérieur 2 ainsi que d'une surface de cuisson 3 qui porte à sa périphérie 4 une collerette 5 en un matériau conducteur de la chaleur et notamment en tôle qui va en s'élargissant vers le bas et dont le bord inférieur 6 constitue la surface d'appui de l'ustensile culinaire sur la source de chaleur qui n'est pas représentée sur la figure et peut être constituée par la grille métallique d'une cuisinière à gaz ou d'un barbecue. Selon l'invention, l'ustensile culinaire peut également s'appuyer directement sur la braise. La collerette 5 fait donc, en quelque sorte, office d'organe de concentration de la chaleur provenant de la source de chaleur sur la surface de cuisson 3.

La forme et les dimensions de la surface de cuisson 3 ainsi que de la collerette 5, tout en pouvant être quelconques, auront généralement respectivement la forme d'un cercle et d'un tronc de cône.

La hauteur de la collerette 5, c'est-à-dire la distance séparant son bord inférieur 6 de son bord supérieur 4, peut, elle aussi, être quelconque, mais, une grandeur de l'ordre de 2,5 cm s'est avérée comme donnant des résultats particulièrement satisfaisants du point de vue des économies d'énergie.

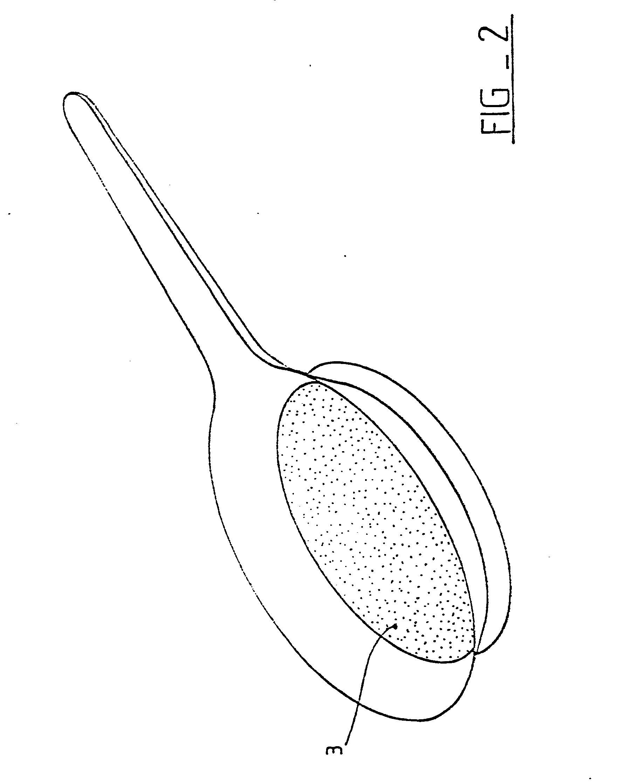

Tandis que selon la figure 1, la surface de cuisson 3 est simplement constituée par une plaque en un matériau conducteur de la chaleur et notamment en un métal, selon la figure 2, qui représente une poêle, celle-ci est constituée par une plaque perforée dont les trous circulaires sont disposés en quinconce et ont un diamètre compris entre environ 1,5 et 3 mm.

Cette première variante de l'invention est, comme il a déjà été indiqué ci-dessus, destinée à permettre la cuisson de grillades, poissons, oeufs au plat, etc... sur la braise de manière à leur donner un goût particulier agréable.

Selon la figure 1, comme selon la figure 2, la collerette 5 peut être fixée à la plaque 3 faisant office de surface de cuisson, par tout moyen conventionnel, notamment soudure, rivets...

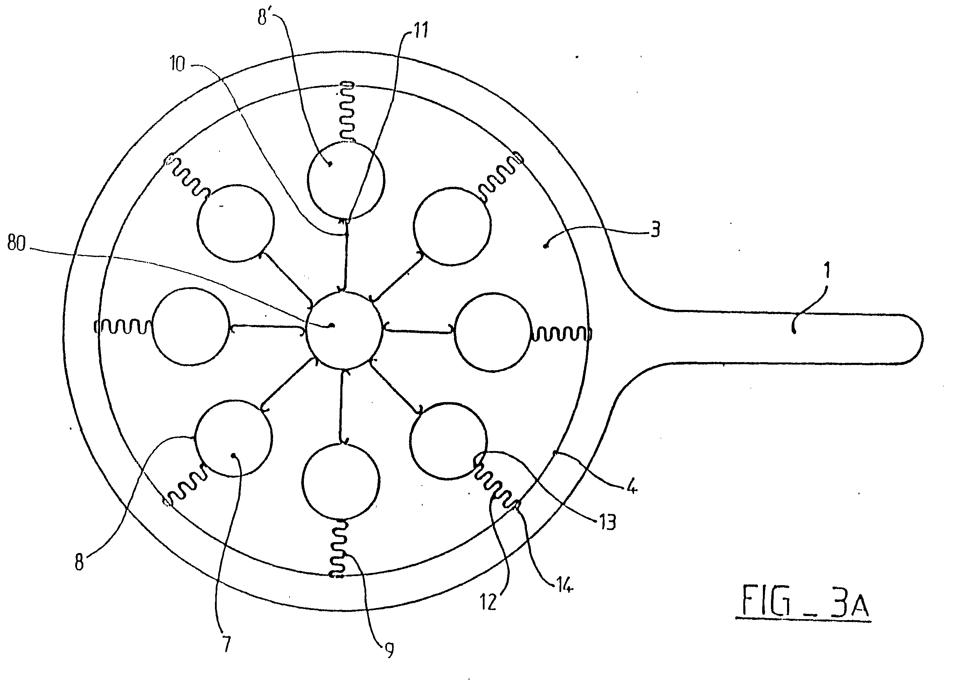

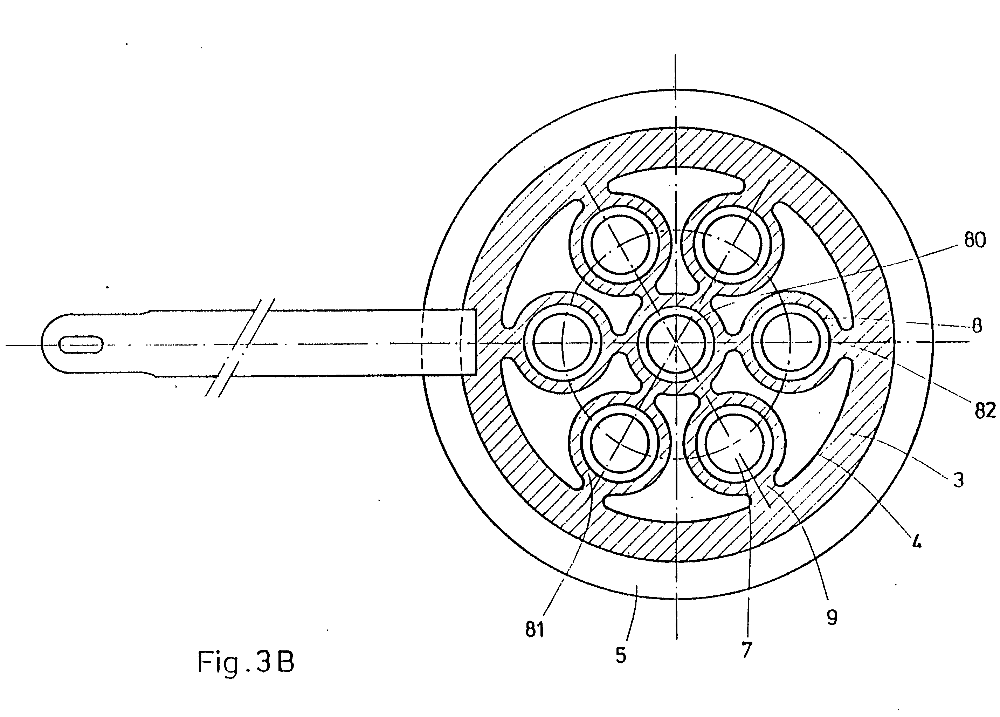

Selon les figures 3A et 3B, la surface de cuisson 3 comporte des ouvertures circulaires 7 susceptibles de permettre la mise en place d'oeufs destinés à être cuits durs ou à la coque. Ces ouvertures 7 sont délimitées par des bagues 8, de préférence métalliques, réunies entre elles et/ou au bord supérieur 4 de la collerette 5 non destiné à être

directement en contact avec la source de chaleur au moyen de tiges de liaison 9 de préférence métalliques. L'ensemble formé par les bagues 8, les tiges de liaison 9 et le bord supérieur 4 de la collerette 5 constitue en fait selon cette variante la surface de cuisson 3.

Selon les figures 3A et 3B, les bagues sont constituées d'une bague centrale 80 entouré de bagues périphériques 81 au nombre de huit sur les figures, mais pouvant être bien entendu en nombre quelconque.

Selon la figure 3A, la bague centrale 80 est reliée à chacune des bagues périphériques 81 par une tige de liaison rigide 10 dont les extrémités 11 sont recourbées en forme de crochet pour permettre leur accrochage facile sur les bagues 80 ou 81. Chacune des bagues périphériques 81 est en plus reliée au bord supérieur 4 de la collerette 5 par une tige de liaison 12 formant ressort dont une extrémité 13 également en forme de crochet pour permettre son accrochage à une bague 81 tandis que son autre extrémité 14 est fixée au bord supérieur 4 de la collerette 5, de préférence par soudure.

Selon la figure 3B, les bagues 8, les tiges de liaison 9 et le bord supérieur 4 de la collerette 5 constituent un motif géométrique en une seule pièce dont les zones pleines sont représentées en hachuré.

Cette configuration présente l'avantage d'être nettement plus rigide que celle représentée sur la figure 3A.

De plus, pour améliorer la stabilité des oeufs une fois mis en place, les bagues 8 sont toutes pourvues de collerettes coniques 82 allant en se rétrécissant vers le bas de manière à définir un volume similaire à celui d'un coquetier.

Bien entendu, la conformation des tiges 9, 10, 12 ainsi que des bagues 8, 80, 81 pourrait être différente sans pour cela sortie du cadre de l'invention.

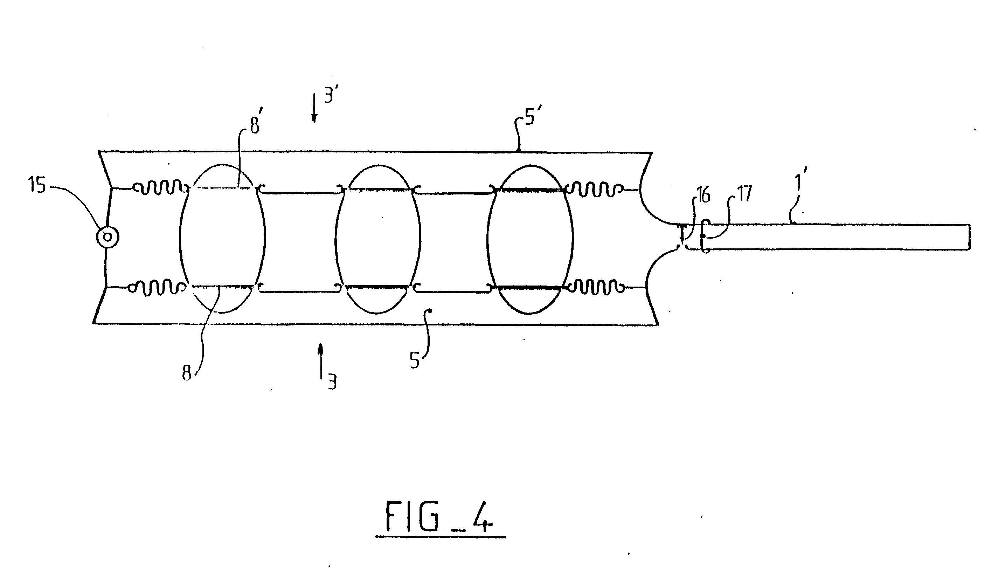

La figure 4 représente en fait deux dispositifs similaires à celui représenté sur la figure 3A et réunis par une charnière 15. C'est-à-dire que cet ustensile comporte deux manches identiques 1, 1', deux collerettes identiques 5, 5' et deux surfaces de cuisson identiques 3, 3' et identiques à celle représentée sur la figure 3A. Les éléments 1', 3', 5' (ou 3, 5, 1) constituent un couvercle pouvant se déplacer entre une position d'ouverture (non représentée sur la figure) permettant la mise en place des oeufs que l'on désire cuire et une position de cuisson (représentée sur la figure 4) où il est rabattu pour emprisonner chaque oeuf en deux bagues identiques 8 et 8'. Il s'agit donc là d'un dispositif totalement réversible qui permet d'éviter les inconvénients dus au risque de casse ou à une cuisson non uniforme des oeufs. Pour permettre de maintenir l'ensemble du dispositif en position de cuisson et faciliter son retournement, il est prévu une butée 16 permettant de maintenir les deux manches 1 et 1' à une certaine distance l'un de l'autre en position de cuisson, ainsi qu'une épingle de serrage 17 permettant de fixer les manches dans cette position.

## Revendications

1. Ustensile culinaire, notamment casserole ou poêle, plus spécialement destiné à être utilisé sur source de chaleur vive telle qu'une cuisinière à gaz, un barbecue ou une cheminée, pour permettre la cuisson d'aliments solides ou liquides, et se composant d'un manche (1), le cas échéant, d'un rebord supérieur (2) ainsi que d'une surface de cuisson (3) destinée à recevoir directement les aliments à cuire et portant à sa périphérie (4) une collerette (5) en forme de tronc de cône en un matériau conducteur de la chaleur, et notamment en tôle, allant en s'élargissant vers le bas et dont le bord inférieur (6) constitue la surface d'appui de l'ustensile culinaire sur la source de chaleur, notamment la grille métallique d'une cuisinière à gaz ou d'un barbecue, ou directement sur la braise, cette collerette (5) faisant office d'organe de concentration de la chaleur sur la surface de cuisson (3) qui est constituée par une surface plane, en un matériau conducteur de la chaleur notamment en métal, ustensile caractérisé en ce que la surface de cuisson (3) comporte des perforations au travers desquelles l'aliment à cuire se trouve directement en contact avec la chaleur, lesdites perforations étant constituées de trous dont le diamètre est compris entre environ 1,5 et 3 mm.

2. Ustensile culinaire selon la revendication 1, caractérisé en ce que les perforations sont des trous circulaires disposés en quinconce.

3. Ustensile culinaire, notamment casserole ou poêle, plus spécialement destiné à être utilisé sur source de chaleur vive telle qu'une cuisinière à gaz, un barbecue ou une cheminée, pour permettre la cuisson d'aliments solides ou liquides, et se composant d'un manche (1), le cas échéant, d'un rebord supérieur (2) ainsi que d'une surface de cuisson (3) destinée à recevoir directement les aliments à cuire et portant à sa périphérie (4) une collerette (5) en forme de tronc de cône en un matériau conducteur de la chaleur, et notamment en tôle, allant en s'élargissant vers le bas et dont le bord inférieur (6) constitue la surface d'appui de l'ustensile culinaire sur la source de chaleur, notamment la grille métallique d'une cuisinière à gaz ou d'un barbecue, ou directement sur la braise, cette collerette (5) faisant office d'organe de concentration de la chaleur sur la surface de cuisson (3) qui est constituée par une surface plane, en un matériau conducteur de la chaleur notamment en métal, ustensile caractérisé en ce que la surface de cuisson (3) comporte des ouvertures circulaires (7) au travers desquelles l'aliment à cuire se trouve directement en contact avec la source de chaleur et qui sont susceptibles de permettre la mise en place d'oeufs destinés à être cuits durs ou à la coque.

4. Ustensile culinaire selon la revendication 3, caractérisé en ce que les ouvertures circulaires (7) sont délimitées par des bagues (8) de préférence métalliques réunies entre elles et/ou au bord supérieur de la collerette (5) non destiné à être directement en contact avec la source de chaleur, au moyen de tiges de liaison (9) de préférence métalliques, l'ensemble formé par les bagues (8), les tiges de liaison (9) et le bord supérieur de la collerette (5) constituant la surface de cuisson (3).

5. Ustensile culinaire selon la revendication 4, caractérisé en ce que la surface de cuisson (3) est constituée d'une bague centrale (80) entourée de bagues périphériques (81), la bague centrale (80) étant reliée à chacune des bagues périphériques (81) par une tige de liaison (9) rigide tandis que chacune des bagues périphériques (81) est en plus reliée au bord supérieur de la collerette (5) par une tige de liaison rigide (9) ou par une tige de liaison (9) formant ressort.

6. Ustensile culinaire selon la revendication 5, caractérisé en ce que les extrémités des tiges de liaison rigides (9) sont en forme de crochet et en ce que l'une des extrémités des tiges de liaison formant ressort est également en forme de crochet tandis que l'autre extrémité est fixée au bord supérieur de la collerette, de préférence par soudure.

7. Ustensile culinaire selon l'une quelconque des revendications 4 à 6, caractérisé en ce qu'il comporte un couvercle (1', 3', 5') se composant d'un second manche (1') identique au premier, d'une seconde surface de cuisson (3') identique à la première et d'une seconde collerette (5') identique à la première, ce couvercle étant relié à l'ustensile au moyen d'une charnière (15) et pouvant être déplacé entre une position d'ouverture permettant la mise en place des oeufs que l'on désire cuire et une position de cuisson où il est rabattu au-dessus de l'ustensile culinaire pour emprisonner chaque oeuf entre deux bagues (8) identiques.

8. Ustensile culinaire selon la revendication 7, caractérisé en ce qu'il comporte une butée (16) permettant de maintenir les deux manches (1, 1') à une certaine distance l'un de l'autre en position de cuisson ainsi qu'une épingle de serrage (17) permettant de fixer le manche dans cette position.

**Claims**

1. Kitchen utensil, specifically a cooking pot or pan, more particularly intended for use on a source of live heat such as a gas cooker, a barbecue or an open fire, to enable solid or liquid foodstuffs to be cooked, comprising a handle (1), where appropriate, a side wall (2) and a cooking surface (3) on which the food to be cooked is placed directly and which has attached to its circumference (4) a collar (5) in the form of a truncated cone and made of a heat-conducting material, specifically sheet metal, which widens towards the bottom and the lower rim (6) of which constitutes the contact surface between the kitchen utensil and the source of heat, specifically the metal grille of a gas cooker or a barbecue, or directly with the live coals, this collar (5) acting as a device for concentrating the heat on the cooking surface (3), which consists of a flat surface made of a heatconducting material, specifically metal, the utensil being characterised by the fact that the cooking surface (3) incorporates perforations through which the food to be cooked comes into direct contact with the heat, the perforations consisting of holes the diameter of which is between 1.5 and 3 mm.

2. Kitchen utensil in accordance with claim 1, characterised by the fact that the perforations are circular staggered holes.

3. Kitchen utensil, specifically a cooking pot or pan, more particularly intended for use on a source of live heat such as a gas cooker, a barbecue or an open fire, to enable solid or liquid foodstuffs to be cooked, comprising a handle (1), where appropriate, a side wall (2) and a cooking surface (3), on which the food to be cooked is placed directly and which has attached to its circumference (4) a collar (5) in the form of a truncated cone and made of a heat-conducting material, specifically sheet metal, which widens towards the bottom and the lower edge (6) of which constitutes the contact surface between the kitchen utensil and the source of heat, specifically the metal grille of a gas cooker or a barbecue, or directly with the live coals, this collar (5) acting as a device for concentrating the heat on the cooking surface (3), which consists of a flat surface made of a heat-conducting material, specifically metal, the utensil being characterised by the fact that the cooking surface (3) incorporates circular openings (7) through which the food to be cooked comes into direct contact with the heat and which are suitable for holding eggs which are to be hard- or soft-boiled.

4. Kitchen utensil in accordance with claim 3, characterised by the fact that the circular openings (7) are bordered by rings (8), preferably of metal, which are joined to each other and/or to the upper rim of the collar (5), which is not intended to be in direct contact with the source of heat, by means of connecting links (9), preferably of metal, the whole assembly consisting of the rings (8), the connecting links (9) and the upper rim of the collar (5) constituting the cooking surface (3).

5. Kitchen utensil in accordance with claim 4, characterised by the fact that the cooking surface (3) consists of a central ring (80) surrounded by peripheral rings (81), the central ring (80) being connected to each of the peripheral rings (81) by a rigid connecting link (9), while each of the peripheral rings (81) is also connected to the upper edge of the collar (5) by a rigid connecting link (9) or by a connecting link (9) in the form of a spring.

6. Kitchen utensil in accordance with claim 5, characterised by the fact that the ends of the rigid connecting links (9) are in the form of a hook, and that one of the ends of the connecting links in the form of a spring is also in the form of a hook while the other end is fixed to the upper rim of the collar, preferably by welding.

7. Kitchen utensil in accordance with any one of claims 4 to 6, characterised by the fact that it incorporates a cover (1', 3', 5') consisting of a second handle (1') identical to the first, a second cooking surface (3') identical to the first and a second collar (5') identical to the first, this cover being connected to the utensil by means of a hinge (15) and being capable of being moved from an open position, allowing the eggs that it is desired to cook to be placed in position, to a cooking position where it is lowered over the kitchen utensil to secure each egg between two identical rings (8).

8. Kitchen utensil in accordance with claim 7, characterised by the fact that it incorporates a stop (16), which enables the two handles (1, 1') to be kept a certain distance apart in the cooking position, and a securing pin (17), which enables the handle to be fixed in that position.

**Patentansprüche**

1. Küchengeschirr, insbesondere Kochtopf oder Pfanne, vornehmlich zur Verwendung auf einer starken Wärmequelle wie einem Gasherd, einem Rost oder einer Feuerstelle, zur Ermöglichung des Garens fester oder flüssiger Nahrungsmittel, bestehend aus einem Griff (1), ggf. einer oberen Umrandung (2) sowie einer Garfläche (3) zur direkten Aufnahme der zu garenden Nahrungsmittel, die an ihrem Umfang (4) einen Bund (5) in Form eines Kegelstumpfes aus einem wärmeleitenden Material, insbesondere aus Blech, mit einem sich nach unten verbreiternden Verlauf trägt, dessen unterer Rand (6) die Stützfläche des Küchengeschirrs auf der Wärmequelle, insbesondere dem Metallgitter eines Gasherds oder eines Rosts, oder direkt auf der Kohle bildet, wobei der Bund (5) als Konzentrationsorgan der Wärme auf der Garfläche (3) dient, die von einer ebenen Fläche aus einem wärmeleitenden Material, insbesondere aus Metall, gebildet ist, dadurch gekennzeichnet, daß die Garfläche (3) Öffnungen aufweist, durch die hindurch sich das zu garende Nahrungsmittel in direkter Berührung mit der Wärme befindet, und die Öffnungen von Löchern gebildet sind, deren Durchmesser etwa 1,5 bis 3 mm beträgt.

2. Küchengeschirr nach Anspruch 1, dadurch gekennzeichnet, daß die Öffnungen aus kreisförmigen Löchern in versetzter Anordnung bestehen.

3. Küchengeschirr, insbesondere Kochtopf oder Pfanne, vornehmlich zur Verwendung auf einer starken Wärmequelle wie einem Gasherd, einem Rost oder einer Feuerstelle, zur Ermöglichung des Garens fester oder flüssiger Nahrungsmittel, bestehend aus einem Griff (1), ggf. einer oberen Umrandung (2) sowie einer Garfläche (3) zur direkten Aufnahme der zu garenden Nahrungsmittel, die an ihrem Umfang (4) einen Bund (5) in Form eines Kegelstumpfes aus einem wärmeleitenden Material, insbesondere aus Blech, mit einem sich nach unten verbreiternden Verlauf trägt, dessen unterer Rand (6) die Stützfläche des Küchengeschirrs auf der Wärmequelle, insbesondere dem Metallgitter eines Gasherds oder eines Rosts, oder direkt auf der Kohle bildet, wobei der Bund (5) als Konzentrationsorgan der Wärme auf der Garfläche (3) dient, die von einer ebenen Fläche aus einem wärmeleitenden Material, insbesondere Metall, gebildet ist, dadurch gekennzeichnet, daß die Garfläche (3) kreisförmige Öffnungen (7) aufweist, durch die hindurch sich das zu garende Nahrungsmittel direkt in Berührung mit der Wärmequelle befindet und die zum Einsetzen von hart oder weich zu kochenden Eiern geeignet sind.

4. Küchengeschirr nach Anspruch 3, dadurch gekennzeichnet, daß die kreisförmigen Öffnungen (7) von Ringen (8) aus vorzugsweise Metall begrenzt sind, die untereinander und/oder mit dem nicht für eine direkte Berührung mit der Wärmequelle vorgesehenen oberen Rand des Bundes (5) durch Verbindungsstangen (9) aus vorzugsweise Metall verbunden sind, und daß die von den Ringen (8), den Verbindungsstangen (9) und dem oberen Rand des Bundes (5) gebildete Einheit die Garfläche (3) darstellt.

5. Küchengeschirr nach Anspruch 4, dadurch gekennzeichnet, daß die Garfläche (3) von einem mittleren Ring (80), der von Umfangsringen (81) umgeben ist, gebildet ist und der mittlere Ring (80) mit jedem der Umfangsringe (81) durch eine starre Verbindungsstange (9) verbunden ist, während jeder Umfangsring (81) außerdem mit dem oberen Rand des Bundes (5) durch eine starre Verbindungsstange (9) oder durch eine als Feder ausgebildete Verbindungsstange (9) verbunden ist.

6. Küchengeschirr nach Anspruch 5, dadurch gekennzeichnet, daß die Enden der starren Verbindungsstangen (9) die Form eines Hakens aufweisen und eines der Enden der als Feder ausgebildeten Verbindungsstangen ebenfalls die Form eines Hakens besitzt, während das andere Ende am oberen Rand des Bundes, vorzugsweise durch Schweißung, befestigt ist.

7. Küchengeschirr nach einem der Ansprüche 4 bis 6, dadurch gekennzeichnet, daß es einen Deckel (1', 3', 5') aufweist, der aus einem mit dem ersten identischen zweiten Griff (1'), einer mit der ersten identischen zweiten Garfläche (3') und einem mit dem ersten identischen zweiten Bund (5') besteht, und daß der Deckel mit dem Küchengeschirr durch ein Scharnier (15) verbunden und zwischen einer Offenstellung, die das Einsetzen der Eier, die man zu kochen wünscht, ermöglicht, und einer Garstellung bewegbar ist, in der er auf das Küchengeschirr für ein Einschließen jedes Eis zwischen zwei identischen Ringen (8) umgeklappt ist.

8. Küchengeschirr nach Anspruch 7, dadurch gekennzeichnet, daß es einen Anschlag (16) zum Halten der beiden Griffe (1, 1') in einem bestimmten gegenseitigen Abstand in der Garstellung sowie eine Halteklammer (17) zum Festlegen des Griffes in dieser Stellung umfaßt.

FIG _1

EP 0 143 867 B1

FIG _ 2

3

EP 0 143 867 B1

FIG _ 3A

EP 0 143 867 B1

Fig.3B

FIG_4